# EUROPEAN PATENT APPLICATION

(11) **EP 4 682 700 A1**
(43) Date of publication of application: **21.01.2026**
(21) Application number: 25188861.6
(22) Date of filing: 10.07.2025
(51) Int. Cl.: G06F 3/06, G06F 12/06

(54) **CONFIGURABLE MEMORY ARCHITECTURE**

(30) Priority: 17.07.2024 US 202463672642 P; 05.03.2025 US 202519071013
(71) Applicant: Microsoft Technology Licensing, LLC, Redmond, WA 98052 (US)
(72) Inventor: PENG, Ruihua, Redmond, Washington, 98052 (US); TANG, Monica M., Redmond, Washington, 98052 (US); XU, Xiaoling, Redmond, Washington, 98052 (US); YILMAZ, Valcin, Redmond, Washington, 98052 (US)
(74) Representative: CMS Cameron McKenna Nabarro Olswang LLP

(57) **Abstract**

The description relates to dynamic memory management. One example includes an assembly that entails processing elements and memory. A dynamic UMA/NUMA configuration module is configured to facilitate managing a first region of the memory based upon a Uniform Memory Access (UMA) architecture and a second region of the memory based upon a Non-Uniform Memory Access (NUMA) architecture. The dynamic UMA/NUMA configuration module is configured to dynamically adjust ratios of the memory in the first region and the second region based upon workload changes on the processing elements.

## Description

### BACKGROUND

Traditionally, System on a Chip (SoC) designs employ one of two main memory architectures. The two main memory architectures are Non-Uniform Memory Access (NUMA) and Uniform Memory Access (UMA).

### SUMMARY

This patent relates to dynamic memory management. One example includes an assembly that entails processing elements and memory. A dynamic UMA/NUMA configuration module is configured to facilitate managing a first region of the memory based upon a Uniform Memory Access (UMA) architecture and a second region of the memory based upon a Non-Uniform Memory Access (NUMA) architecture. The dynamic UMA/NUMA configuration module is configured to dynamically adjust ratios of the memory in the first region and the second region based upon workload changes on the processing elements and/or based on other parameters.

Another example includes physical memory having a range of addresses and processing units electrically connected to the physical memory by electrical pathways. The example also includes a configurable boundary point in the range of addresses that separates addresses assigned to a NUMA region from addresses assigned to an UMA region.

Another example can identify memory associated with processing elements. The memory has a range of addresses. The example can set a configurable boundary point in the range of addresses so that addresses on one side of the configurable boundary point are assigned to a NUMA region and addresses on the other side of the configurable boundary point are assigned to an UMA region. The example can move the configurable boundary point to change relative amounts of the addresses assigned to the NUMA region and the UMA region.

The examples provided in this Summary are intended as a quick reference to some of the described concepts. This Summary is not intended to be exhaustive or limiting.

### BRIEF DESCRIPTION OF THE DRAWINGS

The accompanying drawings illustrate implementations of the concepts conveyed in the present document. Features of the illustrated implementations can be more readily understood by reference to the following description taken in conjunction with the accompanying drawings. Like reference numbers in the various drawings are used wherever feasible to indicate like elements. Further, the left-most numeral of each reference number conveys the figure and associated discussion where the reference number is first introduced. Where space permits, elements and their associated reference numbers are both shown on the drawing page for the reader's convenience. Otherwise, only the reference numbers are shown.

FIGS. 1-4 show example systems that are consistent with some implementations of the present concepts.

FIGS. 5A-10E show example systems and devices and associated dynamically configurable UMA/NUMA memory management that are consistent with some implementations of the present concepts.

FIGS. 11 and 12 show example flowcharts for accomplishing methods that are consistent with some implementations of the present concepts.

### DETAILED DESCRIPTION

This patent relates to dynamically configurable memory architectures for System on a Chip (SoC) designs. The two main memory architectures are Non-Uniform Memory Access (NUMA) and Uniform Memory Access (UMA). UMA provides uniform access times to the memory system, and less memory management complexity, however as SoCs get larger and larger, UMA incurs longer memory access latency and higher power consumption. NUMA on the other hand can provide lower access latency to memories physically closer to the processing elements in the SoCs and lower power consumption, however it comes at the expense of higher memory management complexity. In addition, as SoCs get larger, UMA has lower scalability in order to provide full memory bandwidth evenly and to provide uniform access performance to all the memory clients (e.g., processing elements).

Traditionally, modern SoCs adopt one of these architectures based on the specific applications these SoCs target. SoCs running general purpose applications mostly adopt UMA architectures, whereas SoCs running specific applications mostly adopt NUMA architectures.

When determining the overall system and SoC architecture, the architects traditionally consider the trade-offs of these two architectures and choose the one that provides better performance for the targeted applications and set the memory space for the SoC accordingly. The architecture chosen also implies a fixed memory space for UMA or NUMA memory regions.

In contrast, the inventive concepts provide a hybrid and configurable NUMA/UMA memory space to the SoCs. The hybrid configurable configuration provides a technical solution that allows software development to tradeoff between memory management overhead and the performance and power optimization with improved data allocation.

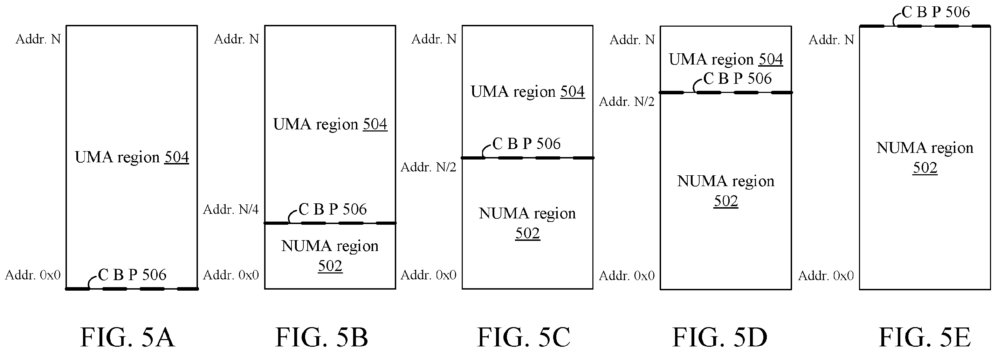

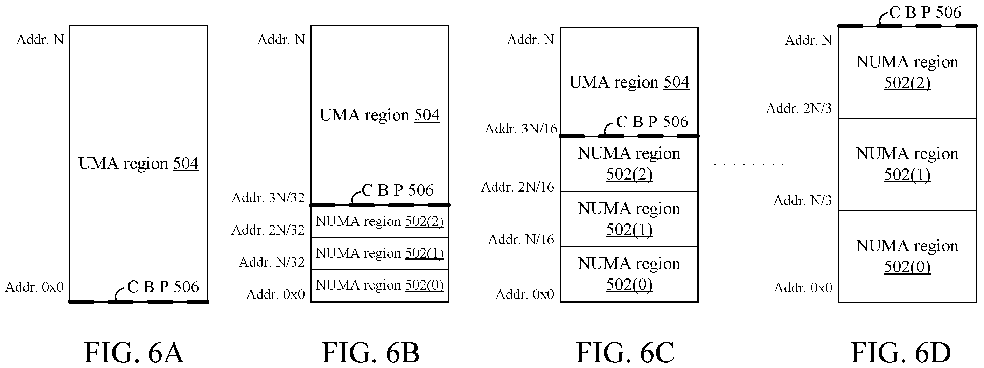

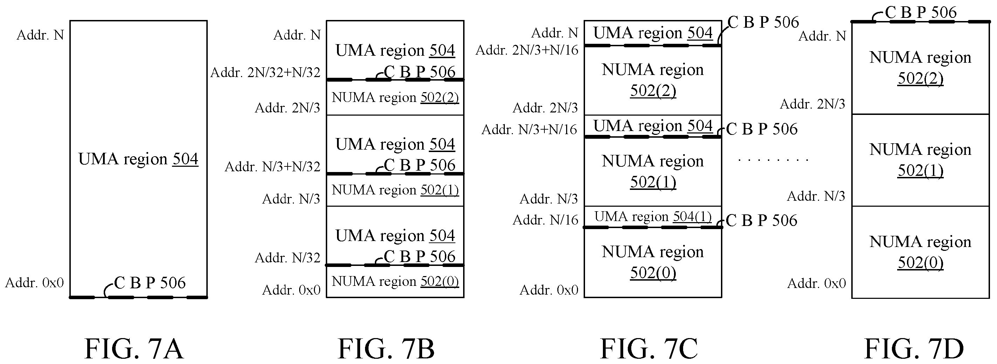

The inventive concepts define a configurable partition (e.g., 'boundary' or 'configurable boundary point') for the available memory space between UMA and NUMA regions and how this configurable partition can be mapped to physical memory locations. Some implementations define an address range in a memory space that can address full capacity of a target memory. These implementations then define a configurable boundary point (or points) in this range that will split the address range into two (or more) regions. The configurable boundary point is software configurable (for example by programming a configuration register) as shown and described below relative to FIG. 5. When there is more than one NUMA region, these implementations can configure the boundary points such that the boundaries start with the end of the previous NUMA region as described below relative to FIG. 6 or the boundaries start from fixed points in the memory space as described below relative to FIG. 7.

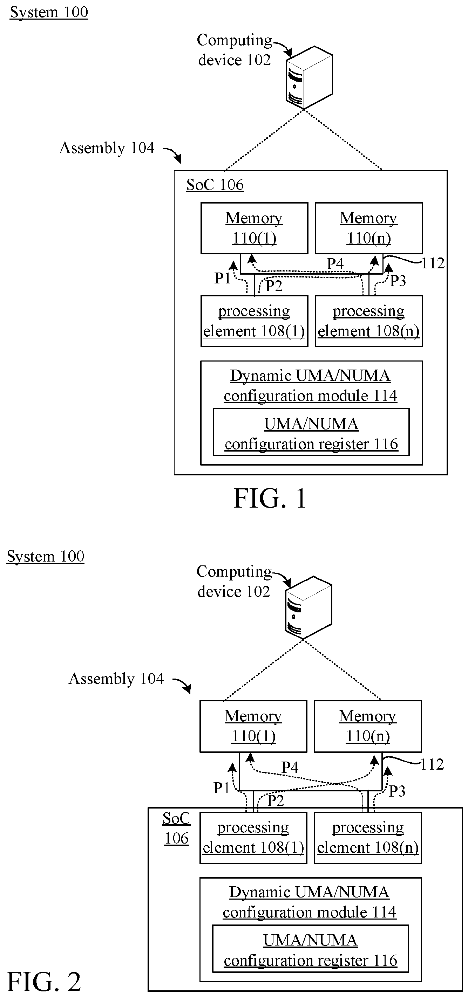

FIGS. 1-4 collectively show example systems 100 which can implement the present configurable memory partition concepts. The illustrated systems include a computing device 102. The computing device 102 can include an assembly 104 of components that collectively provide the computing functionality. The assembly includes a system on a chip (SoC) 106 that includes processing elements 108(1) through 108(n). Only two processing elements 108 are illustrated to avoid clutter on the drawing page, but the present concepts apply to greater numbers of processing elements on the SoC 106.

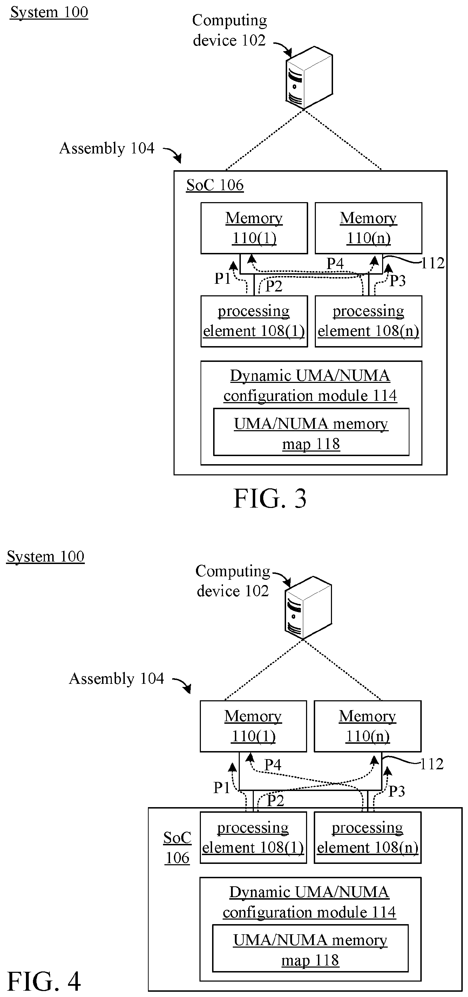

The assembly also includes multiple memory components 110(1) through 110(n). (The terms 'memory' and 'memory components' are used interchangeably in this document). Only two memory components 110 are illustrated to avoid clutter on the drawing page, but the present concepts apply to greater numbers of memory components on the SoC 106. Note that as illustrated in FIGS. 1 and 3, the SoC 106 may include the memory components 110. In other cases, such as those illustrated in FIGS. 2 and 4, the memory components 110 may be external to the SoC 106 though they are part of the assembly 104. Further, some memory components 110 can be integral to the SoC 106 while other memory components are external to the SoC.

Conductors 112, such as buses, communicatively couple the processing elements 108 and the memory components 110 along physical electrical pathways (P). Note that the physical lengths of these electrical pathways tend not to be identical. For instance, pathway one (P1) between processing element 108(1) and memory 110(1) is shorter than pathway two (P2) between processing element 108(1) and memory 110(n). Similarly, pathway three (P3) between processing element 108(n) and memory 110(n) is shorter than pathway four (P4) between processing element 108(n) and memory 110(1). The physical distance (e.g., the pathway length) causes delay (e.g., latency) in signals being communicated back and forth from processing elements to memory. Thus, shorter distances (e.g., shorter path lengths) result in less (e.g., decreased) latency than longer distances (e.g., longer path lengths).

In some cases, the memory 110(1) and 110(2) may be the same type of memory, such as dynamic random access memory (DRAM) or static random access memory (SRAM), among other types. In other cases, the memory may be different types of memory. For instance, memory 110(1) could be DRAM and memory 110(2) could be SRAM, or vice versa.

The illustrated systems 100 also include a dynamic UMA/NUMA configuration module 114. The dynamic UMA/NUMA configuration module 114 facilitates setting and/or moving a configurable boundary point between UMA regions and NUMA regions of the memory. (The configurable boundary or configurable boundary point is introduced below relative to FIG. 5A). In some cases, the UMA/NUMA configuration module 114 can be implemented as part of, or in cooperation with, a memory management unit. The memory management unit can provide mapping between logical memory addresses and physical memory addresses. This allows applications running on the processing elements 108 to refer to logical memory addresses, which are then mapped to the corresponding physical memory addresses.

Various parameters can be evaluated to identify where to set and/or move the configurable boundary point. For instance, the parameters can relate to performance (e.g., latency), resource usage (e.g., power consumption), and/or workload type, among others. In some implementations, the dynamic UMA/NUMA configuration module 114 can utilize the parameters to identify where to locate the configurable boundary point and/or whether to move the configurable boundary point, such as when the workload changes. For example, for purposes of explanation, a first workload may entail some processing units performing operations that require relatively few memory read/writes. For these processing units relatively low memory management overhead may be the highest weighted parameter. Other processing units may be performing operations where latency is the highest rated parameter. Given these conditions, the dynamic UMA/NUMA configuration module 114 may set the configurable boundary point in the middle of the storage addresses. The former processing units can access memory addresses managed with UMA and the latter processing units can access memory addresses managed with NUMA. If the workload shifts and more operations are dependent upon access time (e.g., latency) the dynamic UMA/NUMA configuration module 114 could shift the configurable boundary point so that more of the memory is managed with NUMA to accommodate this new workload.

In the systems illustrated in FIGS. 1 and 2 the dynamic UMA/NUMA configuration module is embodied as an UMA/NUMA configuration register 116. The UMA/NUMA configuration register 116 is processor memory that organizes management of function calls and data storage. In the systems illustrated in FIGS. 3 and 4 the dynamic UMA/NUMA configuration module is embodied as an UMA/NUMA memory map 118. The UMA/NUMA memory map is a structure of data that indicates how the data is laid out and hence where the configurable boundary point is between the UMA managed addresses and the NUMA managed addresses. These aspects are described in more detail below relative to FIGS. 5A-10E.

FIGS. 5A-10E collectively show examples of dynamically configurable UMA/NUMA memory management concepts.

FIGS. 5A-5E show an example memory mapping configuration where a contiguous space of memory 110 is partitioned between a single NUMA region or space 502 and a single UMA region or space 504. Logical addresses of the memory 110 range from (Addr:) 0x0 to N. A dashed line in the diagrams indicates where the technique is configuring the UMA/NUMA region address boundary to be (e.g., configurable boundary point or boundary line 506). In FIG. 5A all addresses (Addr) in memory 110 are assigned to the UMA memory space 504.

In FIG. 5B a quarter of the memory 110 is assigned to the NUMA region 502 starting from the lower addresses (e.g., starting with Addr: 0x0). The remaining address space of the memory 110 (e.g., above the configurable boundary point 506) is assigned to the UMA region 504. In FIG. 5C half of the memory 110 below the configurable boundary point 506 is assigned to the NUMA region 502 starting from the lower addresses. The remaining address space above the configurable boundary point 506 is assigned to the UMA region 504. In FIG. 5D three quarters of the memory 110 is assigned to the NUMA region 504 starting from the lower addresses. The remaining address space above the configurable boundary point 506 is assigned to the UMA region 504. In FIG. 5E all the memory space is assigned to NUMA region 504. Note that FIGS. 5A and 5E represent the extremes where all memory addresses are dedicated to all UMA management or all NUMA management. Intervening FIGS. 5B-5D represent three example intermediate configurable boundary points for purposes of explanation. Other intermediate configurable boundary points are contemplated beyond those illustrated. For instance, the configurable boundary point can establish any ratio of UMA to NUMA regions that is performant for a present or future workload. In some cases, the configurable boundary point is software configurable, such as based upon the workload.

FIGS. 6A-6D collectively show another example memory mapping configuration where a contiguous space of memory 110 is partitioned between three NUMA regions 502(0)-502(2) and single UMA region 504. The dashed line in the diagrams indicates where the technique is configuring the UMA/NUMA region address configurable boundary point 506. In FIG. 6A all addresses in the memory are assigned to the UMA region 504 memory space. In FIG. 6B each NUMA region 502 is assigned in 1/32 increments of the memory space starting from the lower addresses and the NUMA regions 502 are contiguous in the memory space. The remaining memory address space is assigned to the UMA region 504.

In FIG. 6C each NUMA region 502 is assigned in 1/16 increments of the memory space 110 starting from the lower addresses and the NUMA regions are contiguous in the memory space. The remaining address space of the memory 110 is assigned to the UMA region 504. In FIG. 6D each NUMA region 502 is assigned 1/3 of the memory space starting from the lower addresses and the NUMA regions 502 are contiguous in the memory space. No UMA region 504 exists in this configuration. Note that specific fractions or percentages of the memory are allocated to the UMA and NUMA regions for purposes of explanation, other fractions or percentages are contemplated and can be employed in various implementations.

FIGS. 7A-7D collectively show another example memory mapping configuration where a contiguous space of a memory 110 is partitioned between three NUMA regions 502 and single a UMA region 504. The dashed line in the diagrams indicates where the technique is configuring the UMA/NUMA region address configurable boundary point 506. In FIG. 7A all addresses in the memory 110 are assigned to the UMA memory space 504. In FIG. 7B each NUMA region 502 is assigned 1/32 of the memory space starting from the lower addresses. However, the NUMA regions 502 are not contiguous in the memory 110. The first NUMA region 502(0) starts from the lowest address (e.g., Addr:0x0) and the next NUMA region 502(1) starts from an address that is a fraction, in this case 1/3, of the memory space away from the start of the previous NUMA region 502(0). The next NUMA region 502(2) does the same (e.g., starts from an address that is 1/3 of the memory space away from the start of the previous NUMA region 502(1)). The remaining address spaces of the memory 110 between the NUMA regions 502 are assigned to the UMA region 504.

In FIG. 7C each NUMA region 502 is assigned 1/16 of the memory space starting from the lower addresses. However, the NUMA regions 502 are not contiguous in memory space. The first NUMA region 502(0) starts from the lowest address and the next NUMA region 502(1) starts from an address that is 1/3 of the memory space away from the start of the previous NUMA region 502(0). The next NUMA region 502(2) does the same. The remaining address spaces between the NUMA regions 502 are assigned to the UMA region 504. In FIG. 7D each NUMA region 502 is assigned 1/3 of the memory space starting from the lower addresses and the NUMA regions are contiguous in the memory space. No UMA region exists in this configuration.

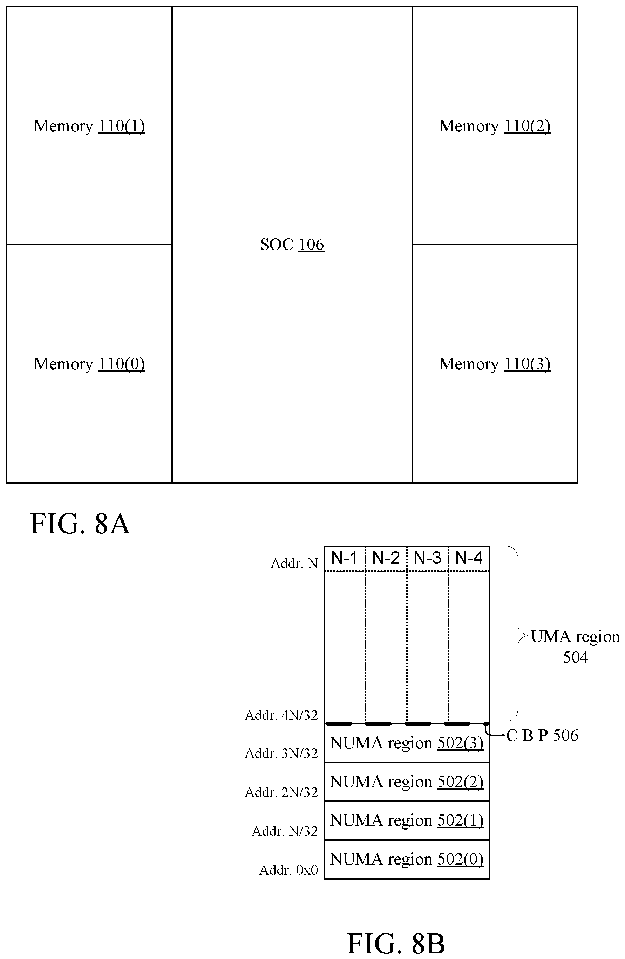

FIGS. 8A-8E collectively show examples of how the memory mapping configurations discussed earlier relative to FIGS. 5A-7D can be mapped to physical memories 110 of a SoC 106. In this example, as shown in FIG. 8A, the SoC 106 is associated with multiple, in this case four, memory blocks (e.g., four blocks of memory 110). These memory blocks may be identical and physically adjacent to one another. Alternatively, the blocks of memory may be different types of memory and/or at different locations on the SoC. In this example, the techniques can apply the register programmable UMA/NUMA memory mapping with four NUMA regions 502 and one UMA region 504 to this memory system. Other numbers of NUMA and UMA regions are contemplated beyond those illustrated here.

The NUMA and UMA programmed boundary (e.g., configurable boundary point 806) and each NUMA region's address upper bound is depicted in FIG. 8B. In this example, the address range is divided into 1/32 incremental sub-ranges. Other divisions can be employed. In this example, the addresses range from the lowest value of 0x0 to the highest value of N-1. NUMA region 502(0) covers addresses 0x0 to N/32. NUMA region 502(1) covers the next value above N/32 to 2N/32. NUMA region 502(2) covers the next value above 2N/32 to 3N/32. NUMA region 502(3) covers the next value above 3N/32 to 4N/32. The UMA region 504 proceeds from the next value above 4N/32 to N-1.

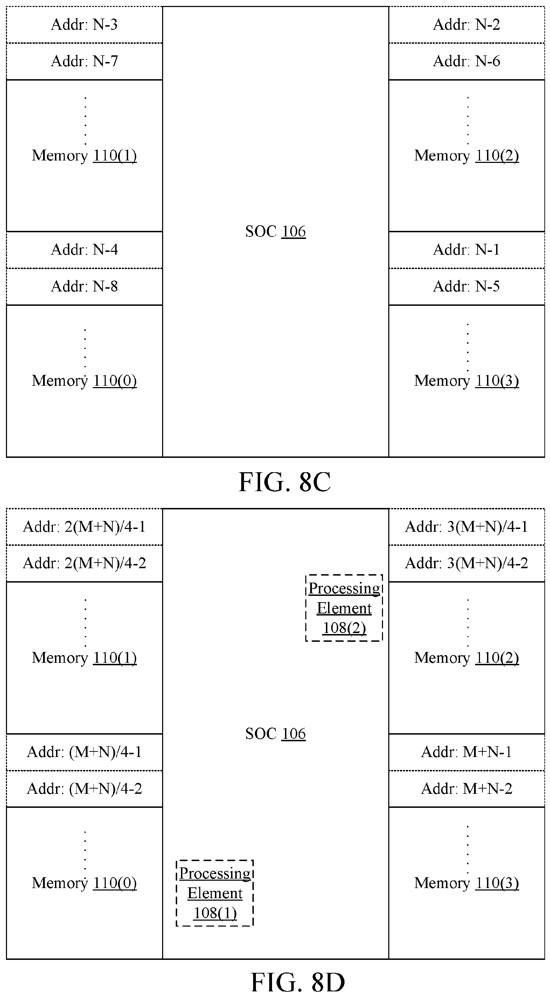

In cases where the technique applies just an UMA memory mapping to the SoC 106, the memory address space can be split such that each consecutive address can be mapped to a different memory block in interleaved fashion as depicted in FIG. 8C. In this case any agent (e.g., processing element) in the SoC on average will have the same latency accessing the memory system. FIG. 8C shows the four memory blocks (e.g., blocks of memory 110(0)-110(3)). The address space ranges from 0 to N-1. In this example, the UMA memory mappings are handled from highest to lowest. Accordingly, address (Addr:) N-1 is mapped to memory 110(3), then address N-2 is mapped to memory 110(2), address N-3 is mapped to memory 110(1), and address N-4 is mapped to memory 110(0). Returning to memory 110(3), address N-5 is mapped to memory 110(3), then address N-6 is mapped to memory 110(2), address N-7 is mapped to memory 110(1), and address N-8 is mapped to memory 110(0). This process is repeated in this counter-clockwise direction until all desired addresses are mapped to the memory blocks. This memory management architecture is beneficial for some processing operations (e.g., some workload), but may not be as advantageous for other workloads, especially those where higher latency is problematic.

In cases where the technique applies just a NUMA memory mapping to the SoC with four NUMA regions, the memory address space can be split into four even chunks and each consecutive address within an individual NUMA region is mapped to the same physical memory block as depicted in FIG. 8D. For instance, memory 110(0) is mapped to addresses (M+N)/4-1, then (M+N)/4-2, etc., memory 110(1) is mapped to addresses 2(M+N)/4-1, then 2(M+N)/4-2, etc., memory 110(2) is mapped to addresses 3(M+N)/4-1, then 3(M+N)/4-2, etc. , and memory 110(3) is mapped to addresses M+N-1, then M+N-2, etc.

In this case, SoC agents (e.g., processing elements) closer to each memory block will have shorter access times when accessing the nearest NUMA region. For instance, processing element 108(1) is physically closer to (e.g., has a shorter pathway) memory 110(0) than the other memory 110(1), 110(2), and 110(3). Similarly, processing element 108(2) is physically closer to (e.g., has a shorter pathway) memory 110(2) than the other memory 110(0), 110(1), and 110(3). As such, processing element 108(1) will have shorter latency utilizing memory 110(0) rather than the other memory 110(1), 110(2), and 110(3) and this can be accomplished by NUMA management of the addresses in memory 110(0). Similarly, processing element 108(2) will have shorter latency utilizing memory 110(2) rather than the other memory 110(0), 110(1), and 110(3) and this can be accomplished by NUMA management of the addresses in memory 110(2). However, this NUMA management architecture comes with a high management overhead that may not be warranted for some workloads.

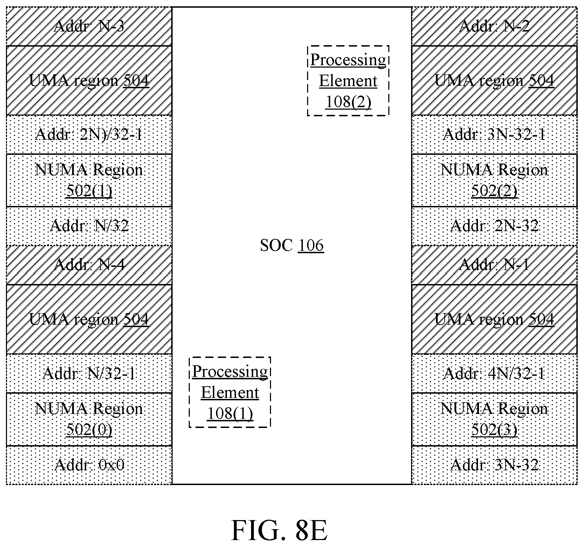

FIG. 8E shows how the technique can apply the hybrid NUMA/UMA memory map approach to divide the physical memory blocks to configurable NUMA/UMA regions. This example includes four blocks of memory 110(0)-110(3). In the illustrated example, the NUMA addresses start from the lower addresses of the physical memory blocks and the UMA addresses start from the upper addresses of the physical memory blocks, the address boundary (e.g., configurable boundary point) between the two regions can be configured via the UMA/NUMA configuration register introduced above relative to FIGS. 1 and 2 and/or the UMA/NUMA memory map 118 of FIGS. 3 and 4. This provides a technical solution that fosters the advantages of each of the UMA and/or NUMA management relative to a given workload at individual processing elements 108.

The UMA/NUMA configuration register allows the technique (e.g., via software) to change memory configuration based on workload needs. This applies both generally (e.g., taken as a whole across all processing elements 108) and/or in relation to individual processing elements 108. For instance, an expected workload across all processing elements 108 could be optimized with 60% NUMA architecture and 40% UMA architecture. The technique can then set the configurable boundary points of the memory 110(0), 110(1), 110(2), and 110(3) to reflect these proportions. This provides a technical solution that allows processing elements 108 to utilize memory 110 advantageously based upon the workload. For instance, processing element 108(1) can utilize the closest NUMA managed region 502(0) for low latency and processing element 108(2) can utilize the closest NUMA managed region 502(2) for low latency. In contrast, both of these processing elements 108(1) and 108(2) can utilize the interleaved UMA regions 504(0)-504(3) for general workloads to reduce management overhead.

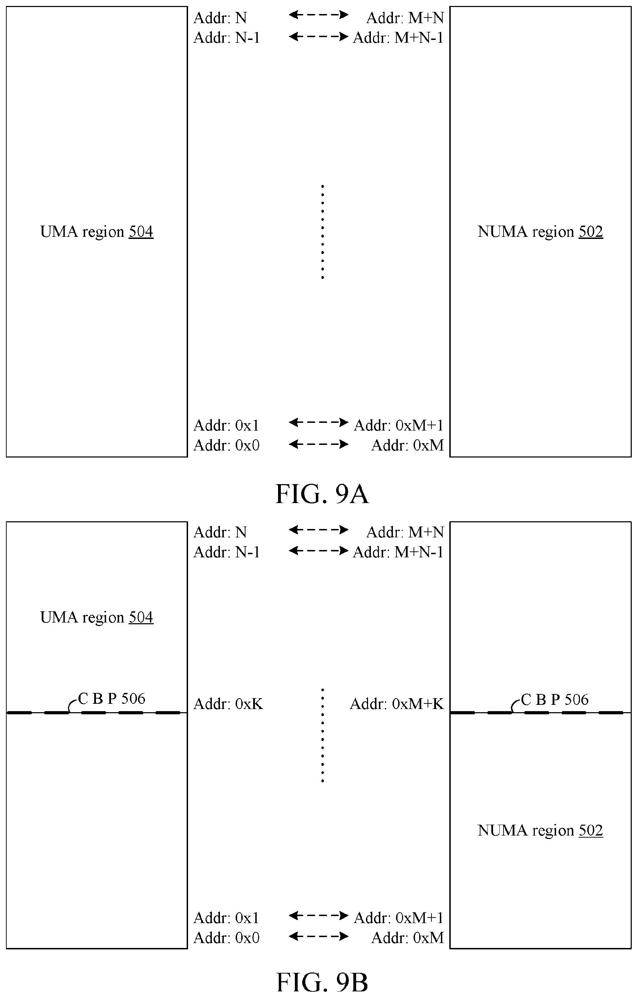

FIGS. 9A-9C collectively show that in some of the current methods two memory spaces 110 of the same size are aliased to each other. One of the memory spaces is assigned to the UMA region 504 and the other space is assigned to the NUMA region 502. In this configuration, management software can use one of the full spaces as an UMA region 504 and other full space as a NUMA region 502 as shown in FIG. 9A.

As shown in FIG. 9B, the technique (e.g., via management software) can optionally partition each memory space dynamically between the UMA and NUMA regions by setting the configurable boundary point (represented by dashed boundary line) 506 in the aliased UMA and NUMA memory spaces. The configurable boundary point 506 will have two aliased addresses, one corresponding to the UMA region boundary 504 and the other corresponding to the NUMA region boundary 502. In the illustrated configuration the memory addresses go from 0xM to N. The configurable boundary point from the NUMA region has address 0xM+K. Thus, the NUMA region extends from address 0xM to 0xM+K. The UMA region extends from the highest address (e.g., N or N-1) down to the configurable boundary point with the lowest address at the configurable boundary point being 0xK. In this example, the technique then treats the addresses in opposite directions from the configurable boundary point 506 as only an UMA region or as only a NUMA region. This allows the technique via software to dynamically size UMA and NUMA regions.

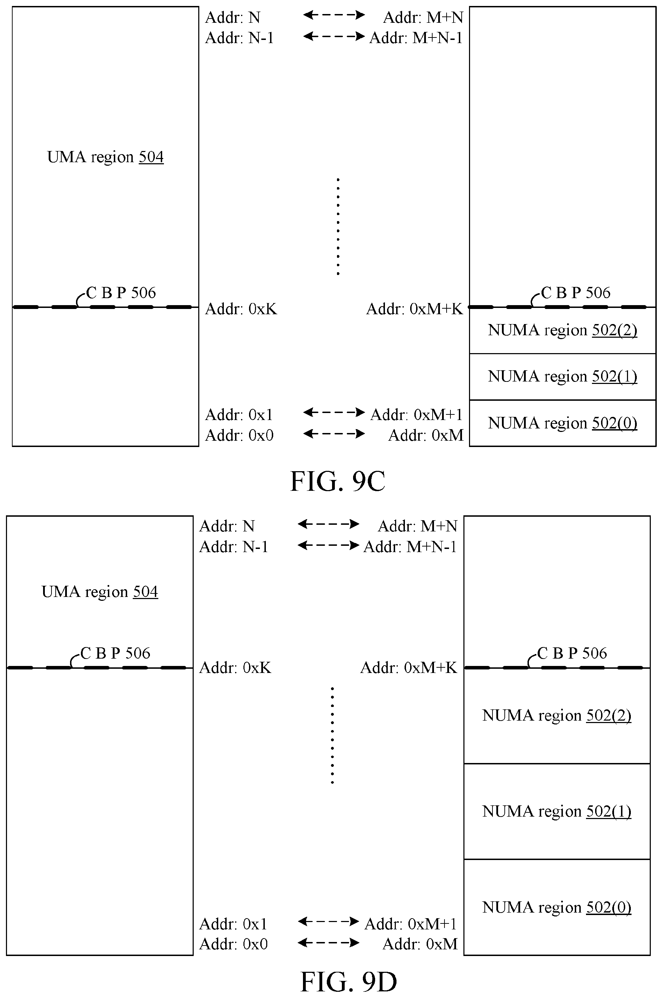

The same concept applies to multiple NUMA and UMA regions 502 and 504. FIGS. 9C and 9D show examples with a single UMA region 504 and three NUMA regions 502(0)-502(2). By moving the configurable boundary point 506 between FIGS. 9C and 9D the technique can decide what the total UMA and NUMA domain sizes will be. The left and right sides of these diagrams show how the same physical memory can be addressed with two different memory address ranges. One range representing UMA, and the other range representing NUMA. Software can then choose to set a configurable boundary point for the physical memory above which it will only use addresses for UMA to treat that physical memory region as UMA, below which it will only use addresses for NUMA to treat that physical memory region as NUMA. The three NUMA regions 502 represent three physical memory regions assigned for each NUMA memory. Basically, the present concepts make it possible to divide NUMA region 502 within itself to X number of NUMA regions. For example, X=3 in the diagram. Since there are three NUMA regions in this example, the NUMA domain can be further divided into three equal size partitions each corresponding to a separate NUMA region. This technique provides a technical solution where the configurable boundary point between the UMA and NUMA regions are software managed without a need for an UMA/NUMA configuration register.

The present techniques, such as via management software, can set the ratio of the size of NUMA regions 502 to UMA regions 504 depending on various parameters, such as those related to workflow. In the illustrated ratio of FIG. 9C, the configurable boundary point 506 is set so there is more memory space (e.g., more addresses) managed as an UMA region 504 than managed as NUMA regions 502. This configuration can work well for general processing where reducing memory management overhead is weighted higher than latency and/or power consumption.

The management software can change the NUMA to UMA ratio by moving the configurable boundary point 506 and re-addressing the respective NUMA 502 and UMA regions 504. FIG. 9D shows such an example where the configurable boundary point 506 now defines that more of the memory space is managed as NUMA regions 502 than UMA regions 504. This configuration is useful for workloads that heavily weight latency and power consumption parameters.

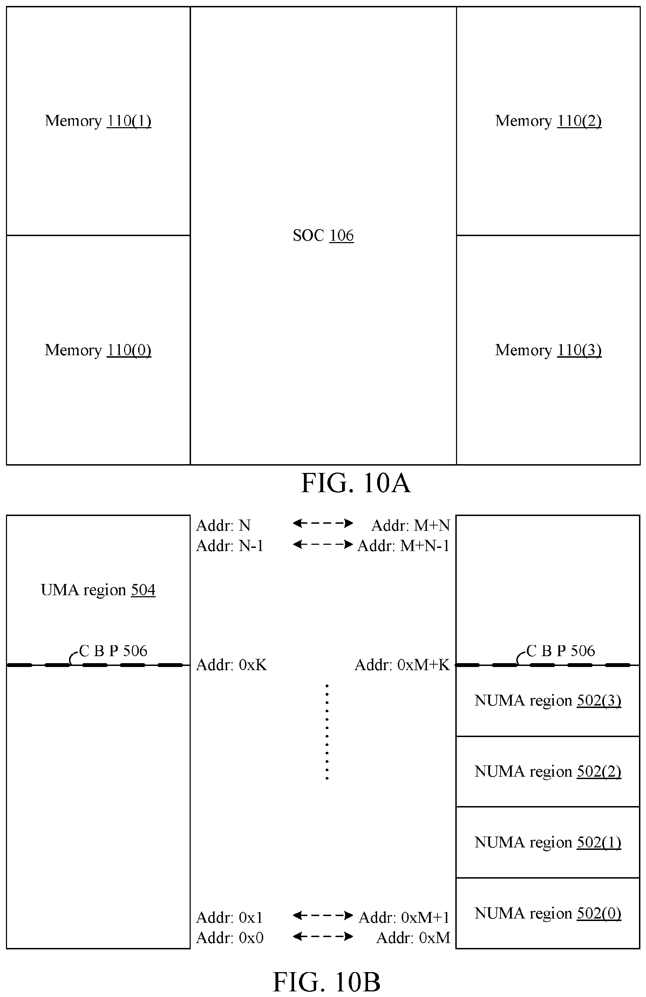

FIGS. 10A-10E collectively show examples of how software configurable UMA/NUMA address aliasing discussed above can be mapped to physical memories 110 of a SoC 106. In this example, as shown in FIG. 10A, the SoC is associated (e.g., communicatively coupled) with four memory blocks (e.g., four blocks of memory 110(0)-110(3)). The technique applies the software programmable UMA/NUMA memory mapping methodology with four NUMA regions 502(0)-502(3) and one UMA region 504 to this memory system. Recall that UMA/NUMA memory mapping was introduced above relative to FIGS. 3 and 4. In this case, FIG. 10B depicts the NUMA and UMA programmed configurable boundary point 506 and each NUMA region's address upper and lower bounds.

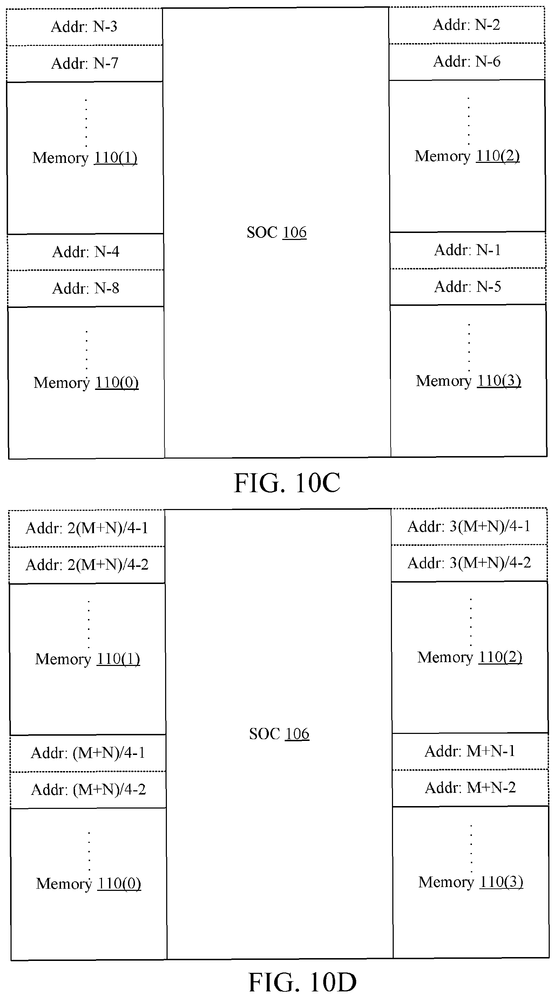

If the technique addresses the physical memory locations with just the UMA memory mapping, the memory address space can be split such that each consecutive address can be mapped to a different memory block in interleaved fashion as depicted in FIG. 10C. In this case, any agent (e.g., processing element) in the SoC on average will have the same latency accessing the memory system. If the technique addresses physical memory locations with just the NUMA memory mapping with four NUMA regions, the memory address space can be split into four even chunks and each consecutive address within a NUMA region is mapped to the same physical memory block as depicted in FIG. 10D. In this case SoC agents (e.g., processing elements 108) closer to each memory block will have shorter access times when accessing the nearest NUMA region 502.

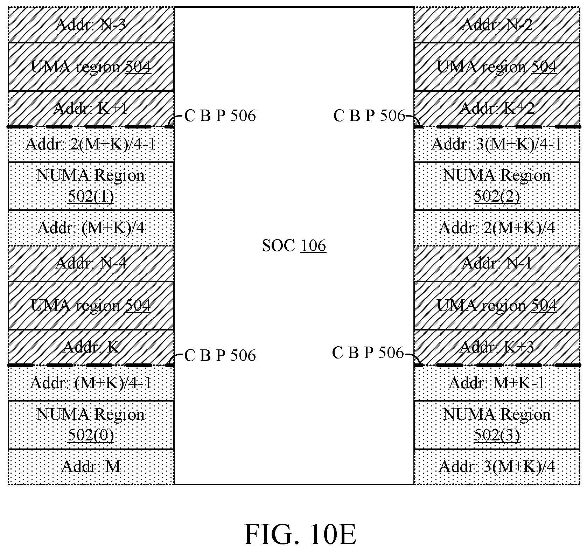

The techniques can apply the hybrid NUMA/UMA memory map approach to divide the physical memory blocks (110) to configurable NUMA/UMA regions 502 and 504 as shown in FIG. 10E. In this example, the NUMA addresses start from the lower addresses of the physical memory blocks and the UMA addresses start from the upper addresses of the physical memory blocks. Other configurations are contemplated. For instance, the NUMA addresses could be above the configurable boundary point 506 and the UMA addresses below the configurable boundary point. The techniques, such as via software, can choose to use either the NUMA addresses or the UMA addresses to address a physical location and set a soft boundary (e.g., configurable boundary point) between the two regions in the physical memory. These techniques provide a technical solution that allows memory configuration changes based on workload needs (e.g., by balancing various parameters relating to performance and cost, for example). If the workload changes or is predicted to change, the technique can move the configurable boundary point to establish a desired NUMA region to UMA region ratio to effectively handle the new workload.

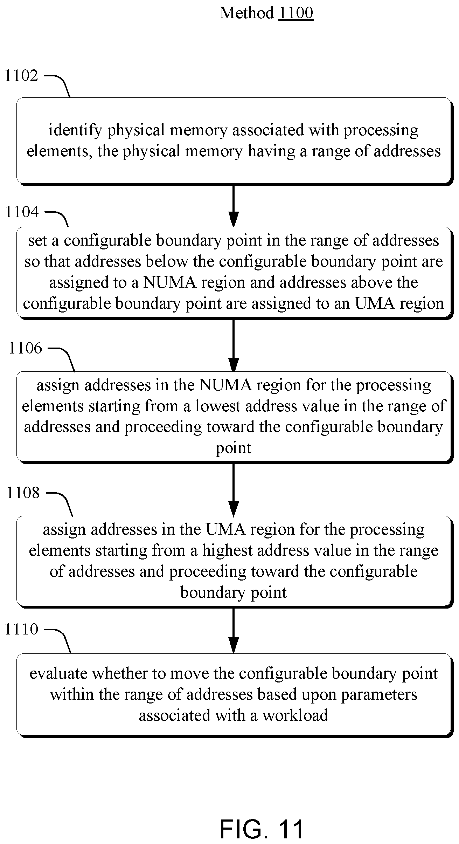

Several implementations are described in detail above. FIG. 11 shows an example UMA/NUMA dynamically configurable memory method or technique 1100.

Block 1102 can identify physical memory associated with processing elements, the physical memory has a range of addresses.

Block 1104 can set a configurable boundary point in the range of addresses so that addresses below the configurable boundary point are assigned to a NUMA region and addresses above the configurable boundary point are assigned to an UMA region.

Block 1106 can assign addresses in the NUMA region for the processing elements starting from a lowest address value in the range of addresses and proceeding toward the configurable boundary point.

Block 1108 can assign addresses in the UMA region for the processing elements starting from a highest address value in the range of addresses and proceeding toward the configurable boundary point.

Block 1110 can evaluate whether to move the configurable boundary point within the range of addresses based upon parameters associated with a workload. For example, the workload can relate to the type of applications running on the processing elements. The parameters can include performance parameters, such as latency, and cost parameters, such as resource usage, etc. Based upon the evaluation, the method can move the configurable boundary point upward to increase the number of addresses in the NUMA region or move the configurable boundary point downward to increase the number of addresses in the UMA region.

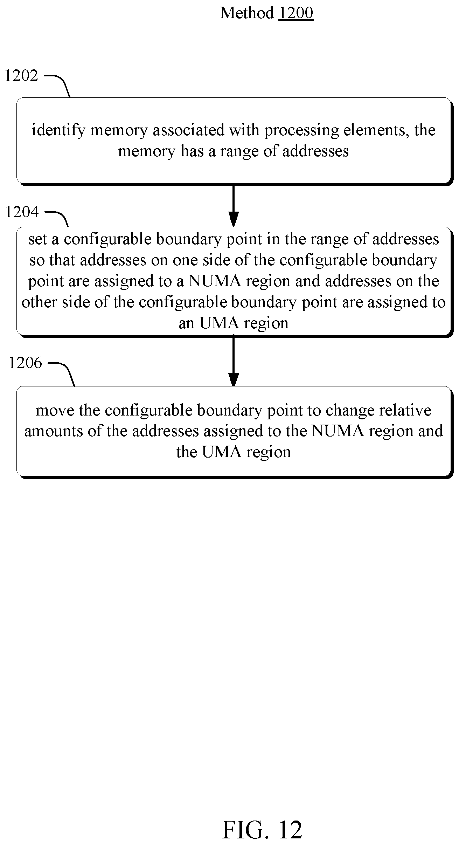

FIG. 12 shows another example UMA/NUMA dynamically configurable memory method or technique 1200.

Block 1202 can identify memory associated with processing elements, the memory has a range of addresses.

Block 1204 can set a configurable boundary point in the range of addresses so that addresses on one side of the configurable boundary point are assigned to a NUMA region and addresses on the other side of the configurable boundary point are assigned to an UMA region. For instance, the NUMA region may entail the addresses above the configurable boundary point with the UMA region having the addresses below the configurable boundary point, or vice versa.

Block 1206 can move the configurable boundary point to change relative amounts of the addresses assigned to the NUMA region and the UMA region.

The order in which the methods are described is not intended to be construed as a limitation, and any number of the described acts can be combined in any order to implement the method, or an alternate method. The method can be accomplished by the systems described above relative to FIGS. 1-10E. In some cases, the method is accomplished by executing code (e.g., software or firmware). In some configurations, the code is stored as computer-readable instructions that are stored on memory and/or storage (e.g., storage media) and executed by a processor. The processor can be one of the processing elements described above or a different processor.

The processing elements can occur on any combination of central processing units (CPUs), graphical processing units (GPUs), hardware accelerators, and/or field programmable gate arrays (FPGAs), among others. The computing devices can also include one or more applications and/or an operating system that can control the UMA/NUMA configurable boundary point and/or benefit from the UMA/NUMA configurable boundary point.

The term "device," "computer," or "computing device" as used herein can mean any type of device that has some amount of processing capability and/or storage capability. Processing capability can be provided by one or more processing elements that can execute data in the form of computer-readable instructions to provide a functionality. Data, such as computer-readable instructions and/or user-related data, can be stored on storage, such as storage that can be internal or external to the device. The storage can include any one or more of volatile or non-volatile memory, hard drives, flash storage devices, and/or optical storage devices (e.g., CDs, DVDs etc.), remote storage (e.g., cloud-based storage), among others. As used herein, the term "computer-readable media" can include signals. In contrast, the term "computer-readable storage media" excludes signals. Computer-readable storage media includes "computer-readable storage devices." Examples of computer-readable storage devices include volatile storage media, such as RAM, and non-volatile storage media, such as hard drives, optical discs, and flash memory, among others.

### ADDITIONAL EXAMPLES

Various device examples are described above. Additional examples are described below. One example includes a system comprising an assembly comprising processing elements and memory and a dynamic UMA/NUMA configuration module configured to facilitate managing a first region of the memory based upon a Uniform Memory Access (UMA) architecture and a second region of the memory based upon a Non-Uniform Memory Access (NUMA) architecture and wherein the dynamic UMA/NUMA configuration module is configured to dynamically adjust ratios of the memory in the first region and the second region based upon workload changes on the processing elements.

Another example can include any of the above and/or below examples where the assembly comprises a system on a chip (SoC).

Another example can include any of the above and/or below examples where the SoC includes the processing elements and the memory or wherein the SoC includes the processing elements but not the memory.

Another example can include any of the above and/or below examples where the dynamic UMA/NUMA configuration module comprises an UMA/NUMA configuration register.

Another example can include any of the above and/or below examples where the dynamic UMA/NUMA configuration module comprises an UMA/NUMA memory map.

Another example can include any of the above and/or below examples where the memory includes a first memory at a first physical location and a second memory at a second physical location.

Another example can include any of the above and/or below examples where a first of the processing elements is relatively closer to the first memory than the second memory.

Another example can include any of the above and/or below examples where a first of the processing elements has a first electrical pathway to the first memory that is shorter than a second electrical pathway to the second memory.

Another example includes a device-implemented method comprising identifying physical memory associated with processing elements, the physical memory having a range of addresses, setting a configurable boundary point in the range of addresses so that addresses below the configurable boundary point are assigned to a NUMA region and addresses above the configurable boundary point are assigned to an UMA region, assigning addresses in the NUMA region for the processing elements starting from a lowest address value in the range of addresses and proceeding toward the configurable boundary point, assigning addresses in the UMA region for the processing elements starting from a highest address value in the range of addresses and proceeding toward the configurable boundary point, and evaluating whether to move the configurable boundary point within the range of addresses based upon parameters associated with a workload of the processing elements.

Another example can include any of the above and/or below examples where the identifying comprises identifying a length of an electrical pathway from the processing elements to the physical memory.

Another example can include any of the above and/or below examples where the identifying comprises identifying an electrical pathway length between each processing element and each block of the physical memory.

Another example can include any of the above and/or below examples where the parameters include latency associated with the electrical pathway length between each processing element and each block of the physical memory.

Another example can include any of the above and/or below examples where the evaluating comprises moving the configurable boundary point upward to increase the NUMA region of the physical memory to decrease the latency associated with the workload of the processing elements.

Another example includes a device comprising physical memory having a range of addresses, processing elements electrically connected to the physical memory by pathways, and a configurable boundary point in the range of addresses that separates addresses assigned to a Non-Uniform Memory Access (NUMA) region from addresses assigned to a Uniform Memory Access (UMA) region.

Another example can include any of the above and/or below examples where the configurable boundary point is stored in a configuration register.

Another example can include any of the above and/or below examples where the configurable boundary point is stored in a memory map that is stored on the physical memory.

Another example can include any of the above and/or below examples where the configurable boundary point can be adjusted on the memory map to change a ratio of the physical memory assigned to the NUMA region relative to the UMA region.

Another example can include any of the above and/or below examples where the configurable boundary point can be dynamically adjusted on the memory map to accommodate a workflow handled by the processing elements.

Another example can include any of the above and/or below examples where the configurable boundary point is stored with the range of addresses that indicate distances between individual processing elements and the physical memory.

Another example can include any of the above and/or below examples where the physical memory comprises multiple memory blocks addressed in the range of addresses and wherein each of the memory blocks is the same type of memory or where the memory blocks are different types of memory from one another.

### CONCLUSION

The description relates to dynamically configurable memory management. Memory can be divided between and include either or both UMA and NUMA regions. Further the ratio of those regions can be dynamically adjusted based on a given workload. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other features and acts that would be recognized by one skilled in the art are intended to be within the scope of the claims.

## Claims

1. A system, comprising:
an assembly comprising processing elements and memory; and,
a dynamic UMA/NUMA configuration module configured to facilitate managing a first region of the memory based upon a Uniform Memory Access (UMA) architecture and a second region of the memory based upon a Non-Uniform Memory Access (NUMA) architecture and wherein the dynamic UMA/NUMA configuration module is configured to dynamically adjust ratios of the memory in the first region and the second region based upon workload changes on the processing elements.

2. The system of claim 1, wherein the assembly comprises a system on a chip (SoC).

3. The system of claim 2, wherein the SoC includes the processing elements and the memory or wherein the SoC includes the processing elements but not the memory.

4. The system of any of claims 1-3, wherein the dynamic UMA/NUMA configuration module comprises an UMA/NUMA configuration register.

5. The system of any of claims 1-4, wherein the dynamic UMA/NUMA configuration module comprises an UMA/NUMA memory map.

6. The system of any of claims 1-5, wherein the memory includes a first memory at a first physical location and a second memory at a second physical location.

7. The system of claim 6, wherein a first of the processing elements is relatively closer to the first memory than the second memory.

8. The system of claim 6, wherein a first of the processing elements has a first electrical pathway to the first memory that is shorter than a second electrical pathway to the second memory.

9. A device-implemented method, comprising:
identifying physical memory associated with processing elements, the physical memory having a range of addresses;
setting a configurable boundary point in the range of addresses so that addresses below the configurable boundary are assigned to a NUMA region and addresses above the configurable boundary point are assigned to an UMA region;
assigning addresses in the NUMA region for the processing elements starting from a lowest address value in the range of addresses and proceeding toward the configurable boundary point;
assigning addresses in the UMA region for the processing elements starting from a highest address value in the range of addresses and proceeding toward the configurable boundary point; and,
evaluating whether to move the configurable boundary point within the range of addresses based upon parameters associated with a workload of the processing elements.

10. The method of claim 9, wherein the identifying comprises identifying a length of an electrical pathway from the processing elements to the physical memory.

11. The method of claim 9, wherein the identifying comprises identifying an electrical pathway length between each processing element and each block of the physical memory.

12. The method of claim 11, wherein the parameters include latency associated with the electrical pathway length between each processing element and each block of the physical memory.

13. The method of claim 12, wherein the evaluating comprises moving the configurable boundary point upward to increase the NUMA region of the physical memory to decrease the latency associated with the workload of the processing elements.

14. The method of claim 12, wherein the evaluating comprises moving the configurable boundary point downward to increase the UMA region of the physical memory to decrease management overhead associated with the workload of the processing elements.

15. The method of any of claims 9-14, further comprising repeating the evaluating when the workload changes.
